# EUROPEAN PATENT SPECIFICATION

(11) **EP 3 601 711 B1**
(45) Date of publication and mention of the grant of the patent: **13.03.2024**
(21) Application number: 18775220.9
(22) Date of filing: 30.03.2018
(51) Int. Cl.: B60J 5/10, E06B 3/70, B60J 5/04

(54) **A COMPOSITE TAILGATE**
VERBUNDSTOFFHECKKLAPPE
HAYON COMPOSITE

(30) Priority: 31.03.2017 CN 201710205348
(43) Date of publication of application: 05.02.2020
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: MAO, Jing, Shanghai 201805 (CN); ZHU, Xiaojun, Shanghai 201805 (CN)
(74) Representative: LLR
(86) International application number: PCT/CN2018/081236
(87) International publication number: WO 2018/177388

(56) References cited:
- CN-A- 101 008 307
- CN-A- 106 004 377
- CN-A- 106 869 707
- CN-U- 204 687 808
- CN-U- 204 701 667
- CN-U- 206 617 043
- DE-A1-102012 003 599
- JP-A- 2012 206 614
- US-A1- 2008 030 047
- US-A1- 2012 306 231

## Description

### Technical Field

The present disclosure concerns automobile ornaments, and more particularly, a composite tailgate.

### Background

Tailgates in the prior art are usually formed of metal (e.g., steel). With weight reduction being a key point in the current development of automobile technologies, tailgates formed of plastics are playing a significant role in reducing the weight of vehicles. For example, a plastic tailgate can reduce weight by 30% compared to the initial metallic tailgate, which percentage is quite significant. The Chinese Utility Model CN204687808U discloses a tailgate made of composite material. However, tailgates formed of plastics often lead to problems of insufficient rigidity due to the materials themselves.

### Summary of the Invention

The invention aims to provide a composite tailgate to solve the above-mentioned problem of insufficient rigidity of plastic tailgates in the prior art.

To this end, the present disclosure provides a composite tailgate, comprising an interior panel and an exterior panel, wherein the interior panel comprises a window frame and a main body located below the window frame that are formed integrally, the main body comprising a main body upper traverse, a connecting structure, and a main body lower traverse that are provided successively from top to bottom, wherein the connecting structure comprises a left inverted V-shaped structure, a right inverted V-shaped structure, and a lock-latch reinforcing plate therebetween, the left inverted V-shaped structure and the right inverted V-shaped structure connecting the main body upper traverse and the main body lower traverse. In addition, the window frame is formed by a left D pillar ornament panel, a window frame upper traverse, a right D pillar ornament panel, and a window frame lower traverse that are connected head-to-tail, and wherein the window frame lower traverse transversally connects between the left D pillar ornament panel and the right D pillar ornament panel, and has a S-shaped reinforcing structure that is transversally continuous. By providing inverted V-shaped support structures between the main body upper traverse and the main body lower traverse, the torsional rigidity of the tailgate can be increased. Thanks to such a S-shaped reinforcing structure, the flexural strength on the lower side of the tailgate window can be increased.

The composite tailgate may comprise the following features, taken alone or in combination:
- the tailgate further comprises a spoiler fixed to an upper part of the interior panel, which spoiler adheres, preferably by glue, to a circumferential outer border of the upper part of the interior panel along an outer border of the window frame upper traverse and corresponding outer borders of the left D pillar ornament panel and the right D pillar ornament panel, and an end of the spoiler opposite the window frame upper traverse cooperates with the left D pillar ornament panel and the right D pillar ornament panel preferably by a water-retaining structure.
- the exterior panel adheres, preferably by glue, to a circumferential outer border of a lower part of the interior panel along an outer border of the main body and wherein in the interior of the main body, the exterior panel adheres, preferably by glue, to a predetermined area for applying glue of the interior panel. With the adhesion along the circumferential border of the interior panel and in the predetermined area, the overall rigidity of the composite tailgate can be increased.
- the predetermined area for applying glue comprises a left headlight area, a right headlight area, a top area of the left inverted V-shaped structure, a top area of the right inverted V-shaped structure, and an upper area of the lock-latch reinforcing plate. Compared to the connection between an interior panel and an exterior panel in a non-predetermined area in the prior art, such a predetermined area represents an optimal solution obtained after multiple rounds of optimization, the space and materials required by which having been optimized, which further ensures the pass rate of tailgate quality.
- the predetermined area for applying glue is a symmetric gluing area that is long in the middle and short on the two sides.
- the circumferential outer border of the interior panel has a glue supporting face with a T-shaped configuration, preferably the glue supporting face comprises a glue-retaining strip, which has a height preferably of 1 mm.
- the lock-latch reinforcing plate is connected with the main body upper traverse via a sheet-shaped structure which traverses an entire thickness of the main body. With a sheet-shaped structure that traverses from top to bottom the entire tailgate provided above the location where the lock is installed, the connection strength between the tailgate lock-latch and the main body upper traverse when the tailgate is loaded in the direction of its thickness can be controlled, and the overall rigidity of the composite tailgate can be further increased.
- the sheet-shaped structure comprises two sheet-shaped structures, spaced away and parallel to each other, provided between the left inverted V-shaped structure and the right inverted V-shaped structure.
- the sheet-shaped structure has a wall thickness comprised between 3.5 mm and 5 mm.
- the left inverted V-shaped structure and the right inverted V-shaped structure are provided in a symmetric way in relation to the lock-latch reinforcing plate.
- a reinforcing rib structure is provided in the interior of the left inverted V-shaped structure and/or the right inverted V-shaped structure. As such, the strength of the the inverted V-shaped structures themselves can be enhanced.
- several interconnected cross-shaped rib structures are provided in the interior of the window frame lower traverse. Such structures allow to provide the window frame lower traverse with sufficient rigidity.
- the window frame lower traverse comprises an upper C-shaped opening and a lower C-shaped opening, wherein the upper C-shaped opening is less deep than the lower C-shaped opening. The lower C-shaped opening mainly performs the function of providing the supporting rigidity in the direction of the vehicle body
- protruding ribs are provided as the water-retaining structure on a surface of the left D pillar ornament panel that faces the spoiler, and grooves are provided on a corresponding surface of the spoiler, the protruding ribs shape-match with the grooves. Through the shape match between the protruding ribs and the grooves, water is prohibited from entering the non-sealed junction between the spoiler and the interior panel. In other words, by providing the water-retaining structures of the protruding ribs and the grooves, a flow path for water flow is added here, reducing the risk of water entering in between the spoiler and the interior panel and thus effectively preventing water from flowing into the inside of the tailgate.
- weakening grooves are provided in an outer border areas of the left D pillar ornament panel and/or the right D pillar ornament panel. Thus, the deformation of expansion and shrinkage with temperature changes is resisted and the impact on the border of the interior panel is reduced.
- a spoiler support rib is provided on a surface of the window frame upper traverse that faces the spoiler. As such, the dent rigidity of the spoiler is increased.
- the tailgate is made of a composite formed of polypropylene and long glass fibers (hereinafter PP+LGF). Such a tailgate has a smaller weight compared to a tailgated made of steel. In addition, it has been shown in practice that a tailgate formed of a PP+LGF material is capable of satisfying the requirements of VOC (odor testing), and, when combined with the structure(s) of the present disclosure, is capable of providing the required, sufficient rigidity.

The predetermined area for applying glue is a left headlight area, a right headlight area, a top area of the left inverted V-shaped structure, a top area of the right inverted V-shaped structure, and an upper area of the lock-latch reinforcing plate.

The predetermined area for applying glue is a symmetric gluing means that is long in the middle and short on the two sides.

The circumferential outer border of the interior panel has a glue supporting face with a T-shaped configuration.

The glue supporting face comprises a glue-retaining strip of 1 mm.

The lock-latch reinforcing plate is connected with the main body upper traverse via a sheet-shaped structure which traverses an entire thickness of the main body.

The sheet-shaped structure is two sheet-shaped structures, spaced away and parallel to each other, provided between the left inverted V-shaped structure and the right inverted V-shaped structure. The sheet-shaped structure has a wall thickness comprised between 3.5 mm and 5 mm.

The left inverted V-shaped structure and the right inverted V-shaped structure are provided in a symmetric way in relation to the lock-latch reinforcing plate.

A reinforcing rib structure is provided in the interior of the left inverted V-shaped structure and the right inverted V-shaped structure.

Several interconnected cross-shaped rib structures are provided in the interior of the window frame lower traverse.

The window frame lower traverse comprises an upper C-shaped opening and a lower C-shaped opening, wherein the upper C-shaped opening is less deep than the lower C-shaped opening.

Two protruding ribs are provided as water-retaining structures on a surface of the left D pillar ornament panel that faces the spoiler, and two grooves are provided on a corresponding surface of the spoiler, the protruding ribs shape-match with the grooves.

Weakening grooves are provided in an outer border areas of the left D pillar ornament panel and the right D pillar ornament panel.

Spoiler support rib is provided on a surface of the window frame upper traverse that faces the spoiler

The composite tailgate of the present disclosure reduces significantly the weight of the tailgate by replacing steel with plastics. Moreover, by providing inverted V-shaped support structures between the main body upper traverse and the main body lower traverse, the torsional rigidity of the tailgate can be increased. With internal connecting parts provided inside the said inverted V-shaped structures, the strength of the said inverted V-shaped structures themselves can be enhanced. With a sheet-shaped structure that traverses from top to bottom the entire tailgate provided above the location where the lock is installed, the connection strength between the tailgate lock-latch and the main body upper traverse when the tailgate is loaded in the direction of its thickness can be controlled, and the overall rigidity of the composite tailgate of the present disclosure can be further increased. In the present disclosure, with the S-shaped reinforcing structure that is transversally continuous, the flexural strength on the lower side the tailgate window can be increased. In the present disclosure, with the adhesion along the circumferential border of the interior panel and in the predetermined area, the overall rigidity of the composite tailgate of the present disclosure can be increased. Compared to the connection between an interior panel and an exterior panel in a non-predetermined area in the prior art, the predetermined area of the present disclosure represents an optimal solution obtained after multiple rounds of optimization, the space and materials required by which having been optimized, which further ensures the pass rate of tailgate quality.

### Brief description of the drawings

Figure 1 is a structural schematic view of an interior panel of a tailgate according to the present disclosure;
Figure 2 shows a weakening groove of a D pillar ornament panel of an interior panel of a tailgate according to the present disclosure;
Figure 3 shows a cooperation between an interior panel and a spoiler of a tailgate according to the present disclosure;
Figure 4 shows a water-retaining structure of a D pillar ornament panel of an interior panel of a tailgate according to the present disclosure;
Figure 5 is a sectional view of a window frame lower traverse of an interior panel of a tailgate according to the present disclosure;
Figure 6 shows a connecting structure of an interior panel of a tailgate according to the present disclosure;
Figure 7 shows a predetermined area for applying glue of an interior panel of a tailgate according to the present disclosure; and
Figure 8 is a sectional view of a circumferential outer border of an interior panel of a tailgate according to the present disclosure.

### Detailed Description of Embodiments

Preferred embodiments of the present disclosure are provided and described in detail below in connection with the accompanying figures.

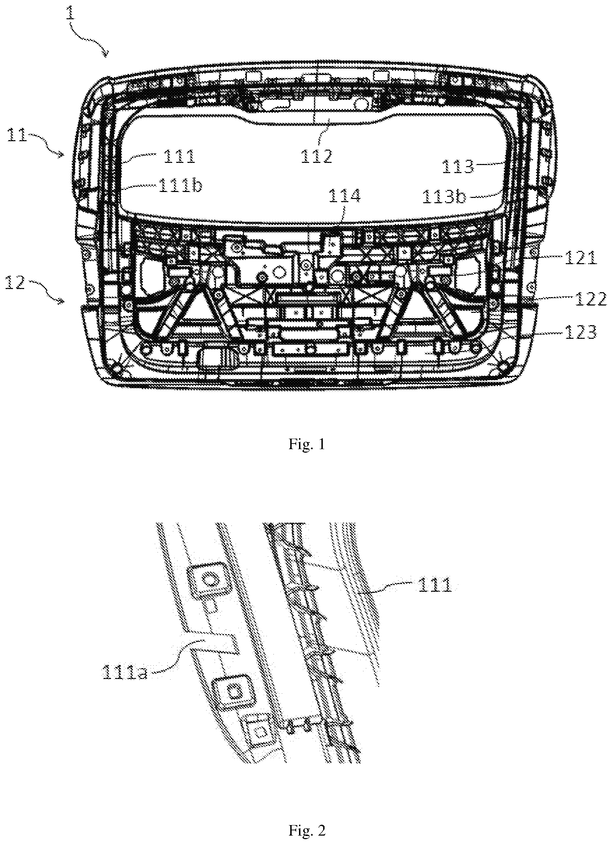

As a conventional automobile ornament, a tailgate comprises an interior panel, a spoiler, and an exterior panel, in which, the spoiler is fixed to the upper part of the interior panel, and the exterior panel is fixed to the lower part of the interior panel. Since the delineation of the different areas of the interior panel comes with conventional terminology, to facilitate the following description, the present disclosure first briefly describes the different areas in connection with Figure 1.

As shown in Figure 1, the interior panel 1 comprises a window frame 11 and a main body 12 that are integrally formed, in which, the window frame 11 is located above the main body 12. The window frame 11 is comprised of a left D pillar ornament panel 111, a window frame upper traverse 112, a right D pillar ornament panel 113, and a window frame lower traverse 114 that are connected head-to-tail. The main body 12 comprises, from top to bottom, a main body upper traverse 121, a connecting structure 122, and a main body lower traverse 123.

According to reports, a tailgate can be formed of a SMC material, SMC being the abbreviation of Sheet Molding Compound. It has been shown in practice that a tailgate formed of a SMC material cannot satisfy the requirements of VOC (odor testing). The tailgate in the present disclosure is formed of a PP+LGF material, the PP+LGF material being a material of which the matrix is polypropylene, and reinforcements are long glass fibers. It has been shown in practice that a tailgate formed of a PP+LGF material is capable of satisfying the requirements of VOC (odor testing), and, when combined with the structure(s) of the present disclosure, is capable of providing the required, sufficient rigidity.

According to reports, when a tailgate is formed of plastics, new problems usually arise due to the fact that the tailgate expands and shrinks with temperature changes. For example, under direct sunlight, a plastic tailgate will expand as the provision of a pneumatic jack on the lower side of the D pillar ornament panel area makes it impossible to add any structure to resist thermal deformation, which will affect the fitting between the tailgate and the surrounding parts. As shown in Figure 2, in the present disclosure, weakening grooves 111a are provided in the outer border area of the left D pillar ornament panel 111 and the right D pillar ornament panel 113, thus resisting the deformation of expansion and shrinkage with temperature changes and reducing the impact on the border of the interior panel 1.

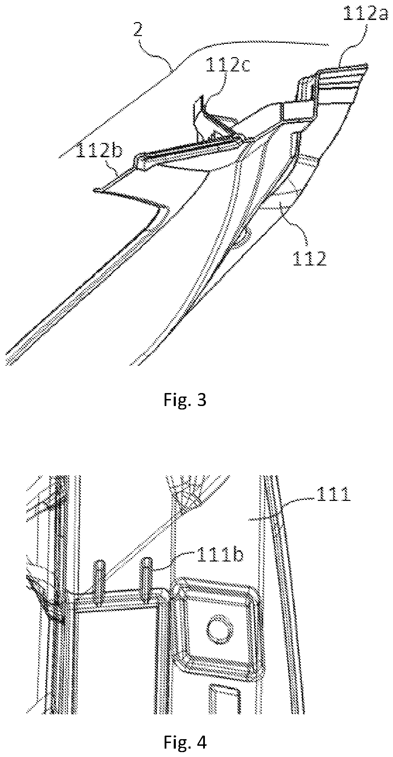

As shown in Figure 3, in the present disclosure, adhesion areas are provided on the two opposite borders 112a, 112b of the window frame upper traverse 112. Thus, the spoiler 2 can be connected onto the interior panel 1 via the adhesion areas, and thus be supported by the window frame upper traverse 112 of the interior panel 1. In addition, since the spoiler 2 is usually in the form of a cover, a spoiler support rib 112c can be provided on the surface of the window frame upper traverse 112 that faces the spoiler to increase the dent rigidity of the spoiler 2.

With reference to Figure 1, in the present disclosure, the two sides (left and right) of the spoiler 2 can be fixed to the interior panel 1 by, respectively, mounting structures on the left D pillar ornament panel 111 and the right D pillar ornament panel 113. In addition, the spoiler 2 adheres, by glue, to the circumferential outer border of the upper part of the interior panel 1 along the outer border 112a of the window frame upper traverse 112 and the corresponding outer borders of the left D pillar ornament panel 111 and the right D pillar ornament panel 113. Therein, the end of the spoiler 2 opposite the window frame upper traverse 112 rests on the left D pillar ornament panel 111 and the right D pillar ornament panel 113, and cooperates with the left D pillar ornament panel 111 and the right D pillar ornament panel 113 through water-retaining structures 111b, 113b. For example, as shown in Figure 4, two protruding ribs 111b are provided on the face of the left D pillar ornament panel 111 that faces the spoiler 2, and correspondingly, two grooves (not shown in the figure) are provided in the corresponding surface of the spoiler 2. Through the shape match between the protruding ribs and the grooves, water is prohibited from entering the non-sealed junction between the spoiler 2 and the interior panel 1. In other words, by providing the water-retaining structures of the protruding ribs and the grooves, a flow path for water flow is added here, reducing the risk of water entering in between the spoiler 2 and the interior panel 1 and thus effectively preventing water from flowing into the inside of the tailgate.

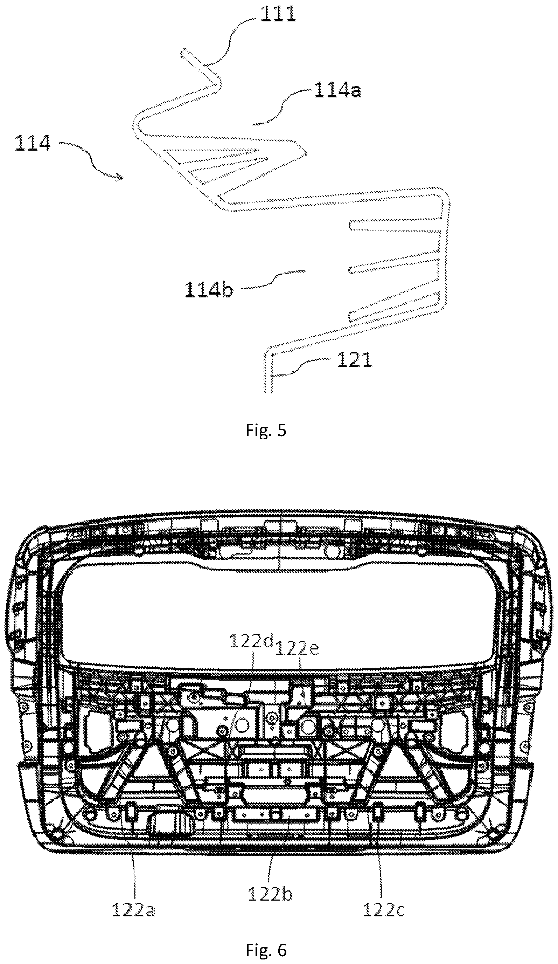

In the present disclosure, the window frame lower traverse 114 transversally connects between the left D pillar ornament panel 111 and the right D pillar ornament panel 113, which are capable of transmitting forces between each other, and thus ensure at the two ends (left and right) the connectivity of the tailgate under working conditions that require resistance to bending. The window frame lower traverse 114 has an S-shaped reinforcing structure that is transversally continuous. The S-shaped reinforcing structure, of which a section is shown in Figure 5, comprises an upper C-shaped opening 114a and a lower C-shaped opening 114b, in which the upper C-shaped opening 114a is less deep than the lower C-shaped opening 114b. Mounting points for a wind shield wiper electric motor are carried inside the upper C-shaped opening 114a, the form of which is adapted to the configuration of the wind shield wiper electric motor. The lower C-shaped opening 114b mainly performs the function of providing the supporting rigidity in the direction of the vehicle body. In addition, as can be seen in Figure 1, several interconnected cross-shaped rib structures are provided inside the window frame lower traverse 114 to provide the latter with sufficient rigidity.

As shown in Figure 6, in the present disclosure, the connection structure 122 comprises a left inverted V-shaped structure 122a, a lock-latch reinforcing plate 122b, and a right inverted V-shaped structure 122c, in which, the lock-latch reinforcing plate 122b is located between the left inverted V-shaped structure 122a and the right inverted V-shaped structure 122c, and, the left inverted V-shaped structure 122a and the right inverted V-shaped structure 122c are provided in a symmetric way in relation to the lock-latch reinforcing plate 122b. Therein, the left inverted V-shaped structure 122a and the right inverted V-shaped structure 122c connect the main body upper traverse 121 and the main body lower traverse 123, increasing the torsional rigidity of the tailgate. In addition, structures such as reinforcing ribs can be provided inside the left inverted V-shaped structure 122a and the right inverted V-shaped structure 122c to increase the inverted V-shaped structures' own anti-torsional function.

In the present disclosure, two symmetric sheet-shaped structures 122d, 122e, shown in the view of Figure 6 as provided perpendicularly to the page, can be connected, for example via bolts, to the lock-latch reinforcing plate 122b. In other words, these two sheet-shaped structures 122d, 122e, spaced away from and parallel to each other between the left inverted V-shaped structure 122a and the right inverted V-shaped structure 122c, traverse the entire thickness of the main body 12, and are connected to the main body upper traverse 121, thus guiding the forces born by the lock-latch reinforcing plate 122b to the main body upper traverse 121 and reducing the forces born in the local area of the lock-latch. Preferentially, the wall thickness of these sheet-shaped structures 122d, 122e is between 3.5 mm and 5 mm.

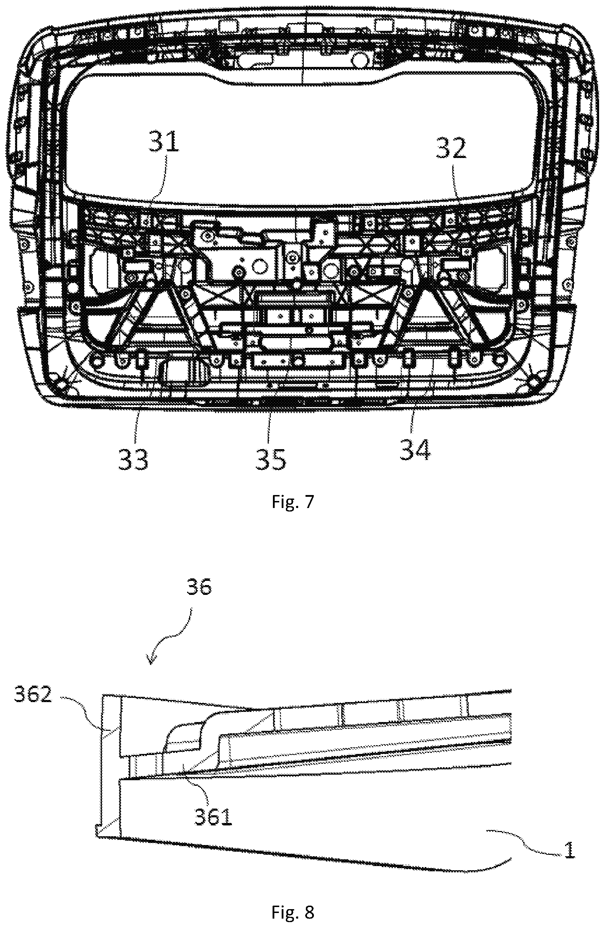

In the present disclosure, the exterior panel is fixed onto the interior panel 1 through the mounting structure on the main body 12, and adheres, by glue, to the interior panel 1, preferentially in five specific areas of the interior panel 1. As shown in Figure 7,the five areas are, respectively, a left headlight area 31, a right headlight area 32, a top area 33 of the left inverted V-shaped structure 122a, a top area 34 of the right inverted V-shaped structure 122c, and an upper area 35 of the lock-latch reinforcing plate 122b. Compared to gluing operations at a random location, the present disclosure ensures the repeatability and pass rate of products by selecting specific areas. In addition, the trail for applying glue according to the present disclosure, preferentially, represents a symmetric means of adhesion that is long in the middle and short on the two sides. Preferentially, the trail presents a path of 300 mm long and 15 mm wide in the middle, with supplemental gluing areas of 30 mm long and 10 mm wide located respectively on the two ends. It can be understood that a gluing trail that is 200 mm to 350 mm long and at least 10 mm wide in the middle satisfies the requirements of the present disclosure. In fact, the length of the middle of the trail path can be adapted to the arrangement of the sheet-shaped reinforcing structures; the width of the gluing trail at the two ends is adapted to the size of the remaining area of the rear light corners after having avoided mounting holes and the size of the opening area of the inverted V shapes.

As described above, the spoiler 2 adheres, by glue, to the circumferential outer border of the upper part of the interior panel 1 along the outer border 112a of the window frame upper traverse 112 and the corresponding outer borders of the left D pillar ornament panel 111 and the right D pillar ornament panel 113. In addition, the exterior panel adheres, by glue, to the circumferential border of the lower part of the interior panel 1 along the outer border of the main body 12. Thus, the spoiler 2 and exterior panel cover on the interior panel and are connected to each other on the circumferential borders. The circumferential glue supporting face is described below with reference to Figure 8. The glue supporting face 36 of the interior panel 1 exhibits a T-shaped configuration at an end face, which comprises a glue-application plate 361 and a flange 362 that are perpendicular to each other. In particular applications, as an example, glue is applied to the upper surface of the glue-application plate 361, the segment of the flange 362 located above the glue-application plate 361 forms a glue-retaining plate preventing the spilling of the glue, and the area of the flange 362 located under the glue-application plate 361 forms a profiling plate, matching the apperance face of the tailgate to meet product requirements. Preferentially, the glue-retaining plate is a glue-retaining strip of 1 mm high that prevents glue from spilling.

## Claims

1. A composite tailgate, comprising an interior panel (1) and an exterior panel, wherein the interior panel (1) comprises a window frame (11) and a main body (12) located below the window frame (11) that are formed integrally, the main body (12) comprising a main body upper traverse (121), a connecting structure (122), and a main body lower traverse (123) that are provided successively from top to bottom, **characterized in that** the connecting structure (122) comprises a left inverted V-shaped structure (122a), a right inverted V-shaped structure (122c), and a lock-latch reinforcing plate (122b) therebetween, the left inverted V-shaped structure (122a) and the right inverted V-shaped structure (122c) connecting the main body upper traverse (121) and the main body lower traverse (123), **in that** the window frame (11) is formed by a left D pillar ornament panel (111), a window frame upper traverse (112), a right D pillar ornament panel (113), and a window frame lower traverse (114) that are connected head-to-tail, and **in that** the window frame lower traverse (114) transversally connects between the left D pillar ornament panel (111) and the right D pillar ornament panel (113), and has a S-shaped reinforcing structure that is transversally continuous.

2. The composite tailgate according to claim 1, wherein the tailgate further comprises a spoiler (2) fixed to an upper part of the interior panel (1), which spoiler (2) adheres, preferably by glue, to a circumferential outer border of the upper part of the interior panel (1) along an outer border of the window frame upper traverse (112) and corresponding outer borders of the left D pillar ornament panel (111) and the right D pillar ornament panel (113), and an end of the spoiler (2) opposite the window frame upper traverse (112) cooperates with the left D pillar ornament panel (111) and the right D pillar ornament panel (113) preferably by a water-retaining structure.

3. The composite tailgate according to anyone of preceding claims, wherein the exterior panel adheres, preferably by glue, to a circumferential outer border of a lower part of the interior panel (1) along an outer border of the main body (12) and wherein in the interior of the main body (12), the exterior panel adheres, preferably by glue, to a predetermined area for applying glue of the interior panel (1).

4. The composite tailgate according to claim 3, wherein the predetermined area for applying glue comprises a left headlight area (31), a right headlight area (32), a top area (33) of the left inverted V-shaped structure (122a), a top area (34) of the right inverted V-shaped structure (122c), and an upper area (35) of the lock-latch reinforcing plate (122b).

5. The composite tailgate according to anyone of claims 2-4, wherein the circumferential outer border of the interior panel (1) has a glue supporting face with a T-shaped configuration, preferably the glue supporting face comprises a glue-retaining strip, which has a height preferably of 1 mm.

6. The composite tailgate according to anyone of preceding claims, wherein the lock-latch reinforcing plate (122b) is connected with the main body upper traverse (121) via a sheet-shaped structure which traverses an entire thickness of the main body (12).

7. The composite tailgate according to claim 6, wherein the sheet-shaped structure comprises two sheet-shaped structures, spaced away and parallel to each other, provided between the left inverted V-shaped structure (122a) and the right inverted V-shaped structure (122c).

8. The composite tailgate according to anyone of preceding claims, wherein the left inverted V-shaped structure (122a) and the right inverted V-shaped structure (122c) are provided in a symmetric way in relation to the lock-latch reinforcing plate (122b).

9. The composite tailgate according to anyone of preceding claims, wherein a reinforcing rib structure is provided in the interior of the left inverted V-shaped structure (122a) and/or the right inverted V-shaped structure (122c).

10. The composite tailgate according to anyone of claims 1-9, wherein several interconnected cross-shaped rib structures are provided in the interior of the window frame lower traverse (114).

11. The composite tailgate according to anyone of claims 1-10, wherein the window frame lower traverse (114) comprises an upper C-shaped opening and a lower C-shaped opening, wherein the upper C-shaped opening is less deep than the lower C-shaped opening.

12. The composite tailgate according to anyone of claims 2-11, wherein protruding ribs are provided as the water-retaining structure on a surface of the left D pillar ornament panel (111) that faces the spoiler (2), and grooves are provided on a corresponding surface of the spoiler (2), the protruding ribs shape-match with the grooves.

13. The composite tailgate according to anyone of claims 1-12, wherein weakening grooves are provided in an outer border areas of the left D pillar ornament panel (111) and/or the right D pillar ornament panel (113).

14. The composite tailgate according to anyone of claims 1-13, wherein a spoiler support rib is provided on a surface of the window frame upper traverse (112) that faces the spoiler (2).

## Patentansprüche

1. Verbundheckklappe, die eine Innenverkleidung (1) und eine Außenverkleidung aufweist, wobei die Innenverkleidung (1) einen Fensterrahmen (11) und einen Hauptkörper (12) aufweist, der sich unterhalb des Fensterrahmens (11) befindet und einstückig ausgebildet ist, wobei der Hauptkörper (12) eine obere Hauptkörper-Traverse (121), eine Verbindungsstruktur (122) und eine untere Hauptkörper-Traverse (123) aufweist, die nacheinander von oben nach unten vorgesehen sind, **dadurch gekennzeichnet, dass** die Verbindungsstruktur (122) eine linke umgekehrt V-förmige Struktur (122a), eine rechte umgekehrt V-förmige Struktur (122c) und eine Verriegelungsverstärkungsplatte (122b) dazwischen aufweist, wobei die linke umgekehrt V-förmige Struktur (122a) und die rechte umgekehrt V-förmige Struktur (122c) die obere Hauptkörper-Traverse (121) und die untere Hauptkörper-Traverse (123) verbinden, wobei der Fensterrahmen (11) durch eine linke D-Säulen-Zierplatte (111), eine obere Fensterrahmentraverse (112), eine rechte D-Säulen-Zierplatte (113) und einer unteren Traverse (114) des Fensterrahmens gebildet wird, die Kopf an Kopf miteinander verbunden sind, und dass die untere Traverse (114) des Fensterrahmens quer zwischen der linken D-Säulen-Zierplatte (111) und der rechten D-Säulen-Zierplatte (113) angeschlossen ist und eine S-förmige Verstärkungsstruktur aufweist, die in Querrichtung durchgehend ist.

2. Verbundheckklappe nach Anspruch 1, wobei die Heckklappe ferner einen Spoiler (2) aufweist, der an einem oberen Teil der Innenverkleidung (1) befestigt ist, wobei der Spoiler (2), vorzugsweise durch Klebstoff, an einem umlaufenden Außenrand des oberen Teils der Innenverkleidung (1) entlang eines Außenrandes der oberen Fensterrahmentraverse (112) und entsprechender Außenränder der linken D-Säulen-Zierplatte (111) und der rechten D-Säulen-Zierplatte (113) haftet, und ein Ende des Spoilers (2) gegenüber der oberen Fensterrahmentraverse (112) mit der linken D-Säulen-Zierplatte (111) und der rechten D-Säulen-Zierplatte (113) vorzugsweise durch eine wasserrückhaltende Struktur zusammenwirkt.

3. Verbundheckklappe nach einem der vorhergehenden Ansprüche, wobei die äußere Platte, vorzugsweise durch Klebstoff, an einem äußeren Umfangsrand eines unteren Teils der Innenverkleidung (1) entlang eines äußeren Randes des Hauptkörpers (12) haftet und wobei im Inneren des Hauptkörpers (12) die äußere Platte, vorzugsweise durch Klebstoff, an einem vorbestimmten Bereich zum Auftragen von Klebstoff der Innenverkleidung (1) haftet.

4. Verbundheckklappe nach Anspruch 3, wobei der vorbestimmte Bereich zum Auftragen von Klebstoff einen linken Scheinwerferbereich (31), einen rechten Scheinwerferbereich (32), einen oberen Bereich (33) der linken umgekehrt V-förmigen Struktur (122a), einen oberen Bereich (34) der rechten umgekehrt V-förmigen Struktur (122c) und einen oberen Bereich (35) der Verriegelungsverstärkungsplatte (122b) aufweist.

5. Verbundheckklappe nach einem der Ansprüche 2 bis 4, wobei der umlaufende äußere Rand der Innenverkleidung (1) eine T-förmig ausgebildete Leimstützfläche aufweist, wobei die Leimstützfläche vorzugsweise einen Leimrückhaltestreifen aufweist, der eine Höhe von vorzugsweise 1 mm aufweist.

6. Verbundheckklappe aus Verbundwerkstoff nach einem der vorhergehenden Ansprüche, wobei die Verriegelungsverstärkungsplatte (122b) der oberen Traverse (121) des Hauptkörpers über eine plattenförmige Struktur verbunden ist, die sich über die gesamte Dicke des Hauptkörpers (12) erstreckt.

7. Verbundheckklappe nach Anspruch 6, wobei die plattenförmige Struktur zwei plattenförmige Strukturen aufweist, die voneinander beabstandet und parallel zueinander sind und zwischen der linken umgekehrt V-förmigen Struktur (122a) und der rechten umgekehrt V-förmigen Struktur (1220) vorgesehen sind.

8. Verbundheckklappe nach einem der vorhergehenden Ansprüche, wobei die linke Struktur (122a) in Form eines umgekehrten V und die rechte Struktur (122c) in Form eines umgekehrten V symmetrisch in Bezug auf die Verriegelungsverstärkungsplatte (122b) vorgesehen sind.

9. Verbundheckklappe nach einem der vorhergehenden Ansprüche, wobei im Inneren der linken umgekehrt V-förmigen Struktur (122a) und/oder der rechten umgekehrt V-förmigen Struktur (122c) eine Verstärkungsrippenstruktur vorgesehen ist.

10. Verbundheckklappe nach einem der Ansprüche 1 bis 9, wobei im Inneren der unteren Traverse (114) des Fensterrahmens mehrere miteinander verbundene kreuzförmige Rippenstrukturen vorgesehen sind.

11. Verbundheckklappe nach einem der Ansprüche 1 bis 10, wobei die untere Traverse (114) des Fensterrahmens eine obere C-förmige Öffnung und eine untere C-förmige Öffnung aufweist, wobei die obere C-förmige Öffnung weniger tief ist als die untere C-förmige Öffnung.

12. Verbundheckklappe nach einem der Ansprüche 2 bis 11, wobei vorstehende Rippen als Wasserrückhaltestruktur auf einer dem Spoiler (2) zugewandten Oberfläche der linken D-Säulen-Zierplatte (111) vorgesehen sind und Nuten auf einer entsprechenden Oberfläche des Spoilers (2) vorgesehen sind, wobei die vorstehenden Rippen formschlüssig mit den Nuten sind.

13. Verbundwerkstoff-Heckklappe nach einem der Ansprüche 1 bis 12, wobei Schwächungsrillen in einem äußeren Randbereich der linken D-Säulen-Zierplatte (111) und/oder der rechten D-Säulen-Zierplatte (113) vorgesehen sind.

14. Heckklappe aus Verbundwerkstoff nach einem der Ansprüche 1 bis 13, wobei eine Spoilerstützrippe auf einer dem Spoiler (2) zugewandten Fläche der oberen Traverse (112) des Fensterrahmens vorgesehen ist.

## Revendications

1. Un hayon composite, comprenant un panneau intérieur (1) et un panneau extérieur, dans lequel le panneau intérieur (1) comprend un cadre de fenêtre (11) et un corps principal (12) situé sous le cadre de fenêtre (11) qui sont formés d'un seul tenant, le corps principal (12) comprenant une traverse supérieure du corps principal (121), une structure de connexion (122), et une traverse inférieure du corps principal (123) qui sont disposées successivement de haut en bas, **caractérisée en ce que** la structure de connexion (122) comprend une structure gauche en forme de V inversé (122a), une structure droite en forme de V inversé (122c), et une plaque de renforcement de serrure (122b) entre les deux, la structure gauche en forme de V inversé(122a) et la structure droite en forme de V inversé (122c) reliant la traverse supérieure du corps principal (121) et la traverse inférieure du corps principal (123), **en ce que** le cadre de fenêtre (11) est formé d'un panneau d'ornement du pilier D gauche (111), d'une traverse supérieure du cadre de fenêtre (112), d'un panneau d'ornement du pilier D droit (113), et une traverse inférieure du cadre de fenêtre (114) qui sont reliés bout à bout, et **en ce que** la traverse inférieure du cadre de fenêtre (114) se connecte transversalement entre le panneau d'ornement du pilier D gauche (111) et le panneau d'ornement du pilier D droit (113), et a une structure de renforcement en forme de S qui est transversalement continue.

2. Le hayon composite selon la revendication 1, dans lequel le hayon comprend en outre un spoiler (2) qui est fixé à une partie supérieure du panneau intérieur (1) et qui adhère, de préférence par collage, à un bord extérieur circonférentiel de la partie supérieure du panneau intérieur (1) le long d'un bord extérieur de la traverse supérieure du cadre de fenêtre (112) et des bords extérieurs correspondants du panneau d'ornement du pilier D gauche (111) et du panneau d'ornement du pilier D droit (113), et une extrémité du spoiler (2) opposée à la traverse supérieure du cadre de fenêtre (112) coopère avec le panneau d'ornement du pilier D gauche (111) et le panneau d'ornement du pilier D droit (113), de préférence au moyen d'une structure de rétention d'eau.

3. Le hayon composite selon l'une des revendications précédentes, dans lequel le panneau extérieur adhère, de préférence par collage, à un bord extérieur circonférentiel d'une partie inférieure du panneau intérieur (1) le long d'un bord extérieur du corps principal (12) et dans lequel, à l'intérieur du corps principal (12), le panneau extérieur adhère, de préférence par collage, à une zone prédéterminée pour l'application de colle sur le panneau intérieur (1).

4. Le hayon composite selon la revendication 3, dans lequel la zone prédéterminée pour l'application de la colle comprend une zone de phare gauche (31), une zone de phare droite (32), une zone supérieure (33) de la structure en forme gauche de V inversé(122a), une zone supérieure (34) de la structure droite en forme de V inversé droite (122c), et une zone supérieure (35) de la plaque de renforcement de serrure (122b).

5. Le hayon composite selon l'une des revendications 2 à 4, dans lequel le bord extérieur circonférentiel du panneau intérieur (1) a une face de support de colle avec une configuration en forme de T, de préférence la face de support de colle comprend une bande de rétention de colle, qui a une hauteur de préférence de 1 mm.

6. Le hayon composite selon l'une quelconque des revendications précédentes, dans lequel la plaque de renforcement de serrure (122b) est reliée à la traverse supérieure du corps principal (121) par l'intermédiaire d'une structure en forme de feuille qui traverse toute l'épaisseur du corps principal (12).

7. Le hayon composite selon la revendication 6, dans lequel la structure en forme de feuille comprend deux structures en forme de feuille, espacées et parallèles l'une à l'autre, prévues entre la structure gauche en forme de V inversé (122a) et la structure droite en forme de V inversé (122c).

8. Le hayon composite selon l'une quelconque des revendications précédentes, dans lequel la structure gauche en forme de V inversé(122a) et la structure droite en forme de V inversé (122c) sont prévues de manière symétrique par rapport à la plaque de renforcement de serrure (122b).

9. Le hayon composite selon l'une quelconque des revendications précédentes, dans lequel une structure de nervure de renforcement est prévue à l'intérieur de la structure gauche en forme de V inversé (122a) et/ou de la structure droite en forme de V inversé (122c).

10. Le hayon composite selon l'une des revendications 1 à 9, dans lequel plusieurs structures nervurées interconnectées en forme de croix sont prévues à l'intérieur de la traverse inférieure du cadre de fenêtre (114).

11. Le hayon composite selon l'une des revendications 1 à 10, dans lequel la traverse inférieure du cadre de fenêtre (114) comprend une ouverture supérieure en forme de C et une ouverture inférieure en forme de C, dans laquelle l'ouverture supérieure en forme de C est moins profonde que l'ouverture inférieure en forme de C.

12. Le hayon composite selon l'une des revendications 2 à 11, dans lequel des nervures saillantes sont prévues comme structure de rétention d'eau sur une surface du panneau d'ornement du pilier D gauche (111) qui se trouve en face au spoiler (2), et des rainures sont prévues sur une surface correspondante du spoiler (2), les nervures saillantes s'adaptent à la forme des rainures.

13. Le hayon composite selon l'une des revendications 1 à 12, dans lequel des rainures d'affaiblissement sont prévues dans des zones de bordure extérieure du panneau d'ornement du pilier D gauche (111) et/ou du panneau d'ornement du pilier D droit (113).

14. Le hayon composite selon l'une des revendications 1 à 13, dans lequel une nervure de support de spoiler est prévue sur une surface de la traverse supérieure du cadre de fenêtre (112) qui se trouve en face au spoiler (2)..
